# EUROPÄISCHE PATENTSCHRIFT

(11) **EP 2 734 739 B1**
(45) Veröffentlichungstag und Bekanntmachung des Hinweises auf die Patenterteilung: **23.01.2019**
(21) Anmeldenummer: 12737545.9
(22) Anmeldetag: 18.07.2012
(51) Int. Cl.: F16B 19/10, F16B 5/06

(54) **BEFESTIGUNGSVORRICHTUNG**
FIXING DEVICE
DISPOSITIF DE FIXATION

(30) Priorität: 21.07.2011 DE 102011108298
(43) Veröffentlichungstag der Anmeldung: 28.05.2014
(73) Patentinhaber: A. RAYMOND et Cie, 38000 Grenoble (FR)
(72) Erfinder: WEISSENFELD, Ronnie, 79576 Weil am Rhein (DE); UTZ, Daniel, 79415 Bad Bellingen (DE); BOKÜHN, Sven, 79664 Wehr (DE); SCHNURPFEIL, Manuela, CH-4052 Basel (CH)
(74) Vertreter: König Szynka Tilmann von Renesse Patentanwälte Partnerschaft mbB
(86) Internationale Anmeldenummer: PCT/EP2012/064095
(87) Internationale Veröffentlichungsnummer: WO 2013/011057

(56) Entgegenhaltungen:
- FR-A1- 2 913 469
- US-A1- 2002 037 206

## Beschreibung

Die Erfindung betrifft eine Befestigungsvorrichtung gemäß dem Oberbegriff des Patentanspruches 1.

Eine derartige Befestigungsvorrichtung ist aus FR 2 913 469 A bekannt. Diese vorbekannte Befestigungsvorrichtung zum Befestigen eines Anbauteils an einem Trägerteil verfügt über ein Auflageteil und über eine Anzahl von Hinterrastelementen, die sich von einer Seite des Auflageteils weg erstrecken. Auf der den Hinterrastelementen gegenüber liegenden Seite des Auflageteils ist eine Führungssäule vorhanden, die an einem von dem Auflageteil beabstandeten Abschnitt ein Kopfteil und ein die Führungssäule umgebendes Widerlagerteil trägt, die in einem Abstand voneinander angeordnet sind, wobei das Widerlagerteil über wenigstens eine Sollbruchstelle mit der Führungssäule verbunden ist. Bei der vorbekannten Befestigungsvorrichtung liegt das Widerlagerteil auf der dem Auflageteil abgewandten Seite des Kopfteils, und die Führungssäule ist in einer Endmontageanordnung in einem Führungsschacht versenkt angeordnet, so dass aufgrund des sehr geringen Abstands des Anschnitts der Führungssäule, an dem das Kopfteil angebracht ist, das Kopfteil und das Auflageteil aneinander anliegen. Ein zwischen dem Kopfteil und dem Widerlagerteil angeordnetes Anbauteil lässt sich somit nach Zerstören der oder jeder Sollbruchstelle frei von einem Trägerteil entfernen.

Eine weitere Befestigungsvorrichtung ist aus DE 10 2007 034 785 B3 bekannt. Die vorbekannte Befestigungsvorrichtung verfügt über ein Auflageteil und über eine Anzahl von Hinterrastelementen, die sich von einer Seite des Auflageteils weg erstrecken. Zum Befestigen eines Anbauteiles an einem Trägerteil wird das Anbauteil auf das Trägerteil aufgelegt und die Befestigungsvorrichtung mit den Hinterrastelementen voran durch in dem Anbauteil und dem Trägerteil ausgebildete Durchsteckausnehmungen durchgeführt, bis das Auflageteil auf dem Anbauteil aufliegt und die Hinterrastelemente das Trägerteil hintergreifen.

Der Erfindung liegt die Aufgabe zugrunde, eine Befestigungsvorrichtung der eingangs genannten Art anzugeben, bei der das Anbauteil in einem Abstand von dem Trägerteil montierbar ist und bei der nach Überschreiten einer vorbestimmten Belastung auf das Anbauteil dieses für eine geführte Bewegung in Richtung des Trägerteiles freigegeben ist.

Diese Aufgabe wird bei einer Befestigungsvorrichtung der eingangs genannten Art erfindungsgemäß mit den kennzeichnenden Merkmalen des Patentanspruches 1 gelöst.

Dadurch, dass bei der erfindungsgemäßen Befestigungsvorrichtung auf der den Hinterrastelementen gegenüber liegenden Seite des Auflageteils eine Führungssäule mit einem Kopfteil und mit einem Widerlagerteil zum Befestigen eines Anbauteiles vorhanden ist, lässt sich das Anbauteil in einem Abstand von dem Trägerteil fixieren. Aufgrund der Fixierung des Widerlagerteiles über wenigstens eine Sollbruchstelle an der Führungssäule und Anordnen des Widerlagerteils auf der dem Auflageteil zugewandten Seite des Kopfteils kann sich das Anbauteil von der Führungssäule geführt in Richtung des Trägerteils bewegen.

Dadurch weicht das Anbauteil der Krafteinwirkung beim Zerstören der oder jeder Sollbruchstelle aus und verringert beispielsweise bei einem Einsatz in einer Instrumententafel eines Kraftfahrzeugs die Verletzungsgefahr beim Auftreffen eines Körperteiles eines Insassen auf das Anbauteil.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles der Erfindung mit Bezug auf die Figuren der Zeichnung. Es zeigen:
- Fig. 1: in einer perspektivischen Ansicht ein Ausführungsbeispiel einer erfindungsgemäßen Befestigungsvorrichtung,
- Fig. 2: das Ausführungsbeispiel gemäß Fig. 1 in einem Längsschnitt,
- Fig. 3: in einer perspektivischen Ansicht das Ausführungsbeispiel gemäß Fig. 1 beim Fixieren eines Anbauteiles in einem Abstand von einem Trägerteil in einer Regelanordnung und
- Fig. 4: in einer perspektivischen Ansicht die Anordnung gemäß Fig. 3 nach Einwirken einer übergroßen Belastung auf das Anbauteil.

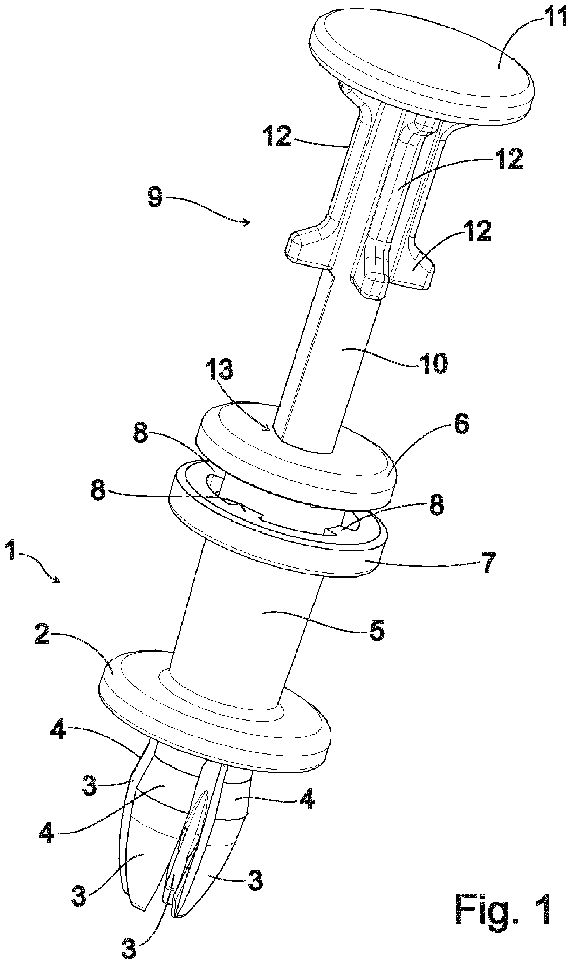

Fig. 1 zeigt in einer perspektivischen Ansicht ein Ausführungsbeispiel einer erfindungsgemäßen Befestigungsvorrichtung, das vorzugsweise aus einem hartelastischen Kunststoffmaterial hergestellt ist. Das Ausführungsbeispiel gemäß Fig. 1 verfügt über einen länglichen Nietkörper 1, der mit einem scheibenartigen Auflageteller 2 als Auflageteil ausgebildet ist. Auf einer Seite des Auflagetellers 2 sind eine Anzahl von Spreizwangen 3 als Hinterrastelemente um die Mittellängsachse des Nietkörpers 1 angeformt, die sich in Längsrichtung von dem Auflageteller 2 weg erstrecken. Jede Spreizwange 3 ist zum Erzielen eines Hintergriffes mit einer gegenüber der Längsachse des Nietkörpers 1 schräg gestellten Hinterrastfläche 4 ausgebildet.

Auf der den Spreizwangen 3 gegenüber liegenden Seite des Auflagetellers 2 ist eine hohlzylinderartig geformte Führungssäule 5 mit dem Auflageteller 2 verbunden, die sich in Längsrichtung von dem Auflageteller 2 weg erstreckt. Bei dem Ausführungsbeispiel gemäß Fig. 1 sind an dem dem Auflageteller 2 abgewandten Ende der Führungssäule 5 ein Kopfteller 6 als Kopfteil und in einem Abstand von dem Kopfteller 6 auf dessen dem Auflageteller 2 zugewandten Seite ein ringartiger, umfänglich geschlossener Widerlagerring 7 als Widerlagerteil vorhanden. Der Kopfteller 6 ist, wie auch der Auflageteller 2, fest und gegenüber total zerstörend wirkenden Kräften widerstandsfähig mit der Führungssäule 5 verbunden.

Der Widerlagerring 7 ist über eine Anzahl von sich in radialer Richtung zwischen der Führungssäule 5 und dem Widerlagerring 7 erstreckenden Anbindungsstegen 8 mit der Führungssäule 5 verbunden, so dass der Widerlagerring 7 bei gegenüber den zum Lösen des Auflagetellers 2 beziehungsweise des Kopftellers 6 von der Führungssäule 5 erforderlichen total zerstörenden Kräften einwirkenden geringeren außerordentlichen Kräften bereits von der Führungssäule 5 lösbar ist.

Weiterhin ist das in Fig. 1 dargestellte Ausführungsbeispiel einer erfindungsgemäßen Befestigungsvorrichtung mit einem Verriegelungsteil 9 ausgestattet, das einen länglichen Einsteckschaft 10 und einen an einem Ende des Einsteckschaftes 10 mit diesem verbundenen Druckteller 11 aufweist. Auf der dem Einsteckschaft 10 zugewandten Seite des Drucktellers 11 sind eine Anzahl von Distanzstegen 12 ausgebildet, die sich von dem Druckteller 11 weg erstrecken. In der Anordnung gemäß Fig. 1 ist der Einsteckschaft 10 abschnittsweise durch eine in dem Kopfteller 6 ausgebildete Durchführausnehmung 13 in die Führungssäule 5 eingeführt.

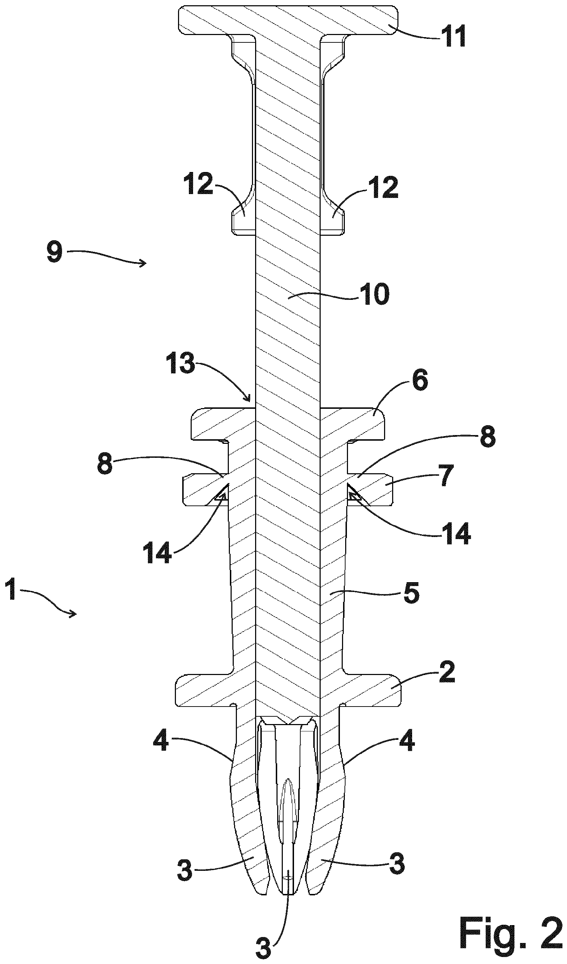

Fig. 2 zeigt das Ausführungsbeispiel gemäß Fig. 1 in einem Längsschnitt mit dem abschnittsweise in der Führungssäule 5 angeordneten Einsteckschaft 10. Aus Fig. 2 ist ersichtlich, dass jeder Anbindungssteg 8 mit einer durch Materialverjüngung in Längsrichtung gebildeten Sollbruchstelle 14 ausgebildet ist, welche die Stärke der zum Lösen des Widerlagerrings 7 erforderlichen außergewöhnlichen Kräfte sehr genau einstellen lässt. Nach Zerstören der Sollbruchstellen 14 ist somit der Widerlagerring 7 in Längsrichtung der Führungssäule 5 zwischen dem Auflageteller 2 und dem Kopfteller 6 verschiebbar gelagert. Weiterhin lässt sich Fig. 2 entnehmen, dass die Führungssäule 5 sich von dem Kopfteller 6 in Richtung des Auflagetellers 2 konisch verjüngend ausgebildet ist.

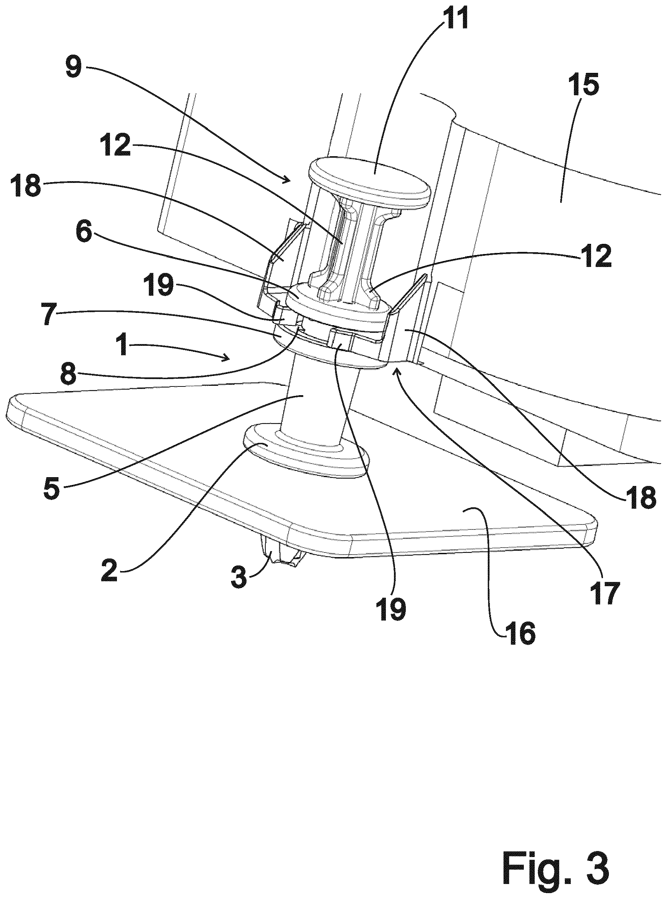

Fig. 3 zeigt in einer perspektivischen Ansicht das Ausführungsbeispiel gemäß Fig. 1 bei einem Befestigen eines in der Darstellung gemäß Fig. 3 nur ausschnittsweise dargestellten Anbauteiles 15 an einem in der Darstellung gemäß Fig. 3 ebenfalls nur ausschnittsweise dargestellten Trägerteil 16 in einer Regelanordnung, in der das Anbauteil 15 einen Abstand von dem Trägerteil 16 hat. Das Anbauteil 15, das beispielsweise ein in einer Instrumententafel eines Kraftfahrzeuges angeordnetes elektronisches Bauteil ist, verfügt über eine Anzahl von außenseitig angeordneten Ringklammern 17, die jeweils ein Paar von Seitenwangen 18 und an jeweils einer Seitenwange 18 angeformte Klammerarme 19 aufweist. Die Klammerarme 19 umschließen die Führungssäule 5 und sind aufgrund von in der Darstellung gemäß Fig. 3 nicht sichtbaren Klemmvorsprüngen, die bei diesem Ausführungsbeispiel an dem Kopfteller 6 auf dessn dem Widerlagerring 7 zugewandten Seite angeordnet sind, mit einer gewissen Verklemmung zum Erzielen einer Spielfreiheit zwischen dem Kopfteller 6 sowie dem Widerlagerring 7 angeordnet, so dass das Anbauteil 15 einen Abstand von dem Trägerteil 16 aufweist, solange wie gemäß der in Fig. 3 dargestellten Regelanordnung der Widerlagerring 7 über die Anbindungsstege 8 mit der Führungssäule 5 verbunden ist.

Weiterhin lässt sich Fig. 3 entnehmen, dass zum Sichern des Nietkörpers 1 an dem Trägerteil 16 das Verriegelungsteil 9 bis zum Anschlag der Distanzstege 12 an dem Kopfteller 6 unter Aufspreizen der Spreizwangen 3 radial nach außen eingeschoben ist.

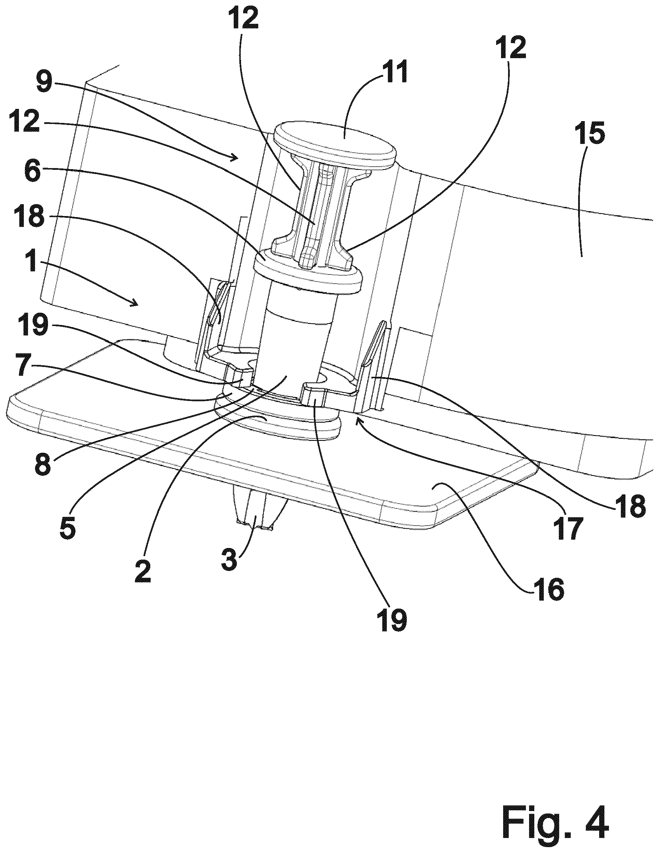

Fig. 4 zeigt in einer perspektivischen Ansicht die Anordnung gemäß Fig. 3 nach Einwirken von außerordentlichen Kräften auf das Anbauteil 15 in Richtung des Trägerteiles 16, wie dies beispielsweise bei einer abrupten negativen Beschleunigung eines Kraftfahrzeuges mit Auftreffen eines menschlichen Körperteiles auf das Anbauteil 15 eintreten kann. Bei Einwirken derart hoher, die an den Anbindungsstegen 8 ausgebildeten Sollbruchstellen 14 zerstörenden außerordentlichen Kräften ist das Anbauteil 15 zum durch die Führungssäule 5 geführten, aufgrund der Konizität der Führungssäule 5 zuverlässig klemmfreien Bewegen in Richtung des Trägerteils 16 freigegeben, bis die Klammerarme 19 mit dem Widerlagerring 7 an dem Auflageteller 2 aufliegen. Dadurch weicht das Anbauteil 15 der Krafteinwirkung aus und verringert bei dem oben erläuterten Einsatz in einer Instrumententafel eines Kraftfahrzeugs die Verletzungsgefahr beim Auftreffen eines Körperteiles eines Insassen auf das Anbauteil 15.

## Patentansprüche

1. Befestigungsvorrichtung zum Befestigen eines Anbauteils (15) an einem Trägerteil (16) mit einem Auflageteil (2) und mit einer Anzahl von Hinterrastelementen (3), die sich von einer Seite des Auflageteils (2) weg erstrecken, wobei auf der den Hinterrastelementen (3) gegenüber liegenden Seite des Auflageteils (2) eine Führungssäule (5) vorhanden ist, die an einem von dem Auflageteil (2) beabstandeten Abschnitt ein Kopfteil (6) und ein die Führungssäule (5) umgebendes Widerlagerteil (7) trägt, die in einem Abstand voneinander angeordnet sind, wobei das Widerlagerteil (7) über wenigstens eine Sollbruchstelle (14) mit der Führungssäule (5) verbunden ist, **dadurch gekennzeichnet, dass** das Widerlagerteil (7) auf der dem Auflageteil (2) zugewandten Seite des Kopfteiles (6) angeordnet ist und dass sich die Führungssäule (5) derart von dem Auflageteil (2) weg erstreckt, dass sich das Anbauteil (15) bei einer auf die oder jede Sollbruchstelle (14) wirkenden zerstörenden Kraft von der Führungssäule (5) geführt in Richtung des Trägerteiles (16) bewegen kann.

2. Befestigungsvorrichtung nach Anspruch 1, **dadurch gekennzeichnet, dass** die Führungssäule (5) sich von dem Kopfteil (6) in Richtung des Auflageteiles (2) konisch verjüngend ausgebildet ist.

3. Befestigungsvorrichtung nach Anspruch 1, **dadurch gekennzeichnet, dass** das Kopfteil ein Kopfteller (6) ist, der an dem dem Auflageteil (2) abgewandten Ende der Führungssäule (5) ausgebildet ist.

4. Befestigungsvorrichtung nach einem der Ansprüche 1 bis 3, **dadurch gekennzeichnet, dass** das Widerlagerteil ein Widerlagerring (7) ist, der die Führungssäule (5) umgibt.

5. Befestigungsvorrichtung nach Anspruch 4, **dadurch gekennzeichnet, dass** der Widerlagerring (7) über eine Anzahl von Aribindungsstegen (8) mit der Führungssäule (5) verbunden ist, wobei jeder Anbindungssteg (8) eine Sollbruchstelle (14) aufweist.

6. Befestigungsvorrichtung nach Anspruch 5, **dadurch gekennzeichnet, dass** die Sollbruchstellen (14) gleich ausgebildet sind.

7. Befestigungsvorrichtung nach Anspruch 6, **dadurch gekennzeichnet, dass** jede Sollbruchstelle (14) durch eine Materialverjüngung in Längsrichtung der Führungssäule (5) gebildet ist.

8. Befestigungsvorrichtung nach einem der Ansprüche 1 bis 7, **dadurch gekennzeichnet, dass** ein längliches Verriegelungsteil (9) vorhanden ist, das verschiebbar in der Führungssäule (5) gelagert und in eine Verriegelungsstellung mit einem Abschnitt zwischen den Hinterrastelementen (3) angeordnet ist.

## Claims

1. Fixing device for fixing an attachment part (15) to a carrier part (16) with a supporting part (2) and with a number of latching elements (3), which extend away from one side of the supporting part (2), wherein a guide pillar (5) is present on the side of the supporting part (2) opposite the side of the latching elements (3), wherein said guide pillar supports, on one section spaced away from the supporting part (2), a head part (6) and a counter bearing part (7) encircling the guide pillar (5), which are spaced apart from one another, wherein the counter bearing part (7) is connected to the guide pillar (5) by means of at least one predetermined breaking point (14), **characterised in that** the counter bearing part (7) is arranged on the side of the head part (6) away from the supporting part (2) and that that guide pillar (5) extends away from the supporting part (2), such that the attachment part (15), in the event of a force acting in a destructive manner on the or on each predetermined breaking point (14), can be moved towards the carrier part (16) guided by the guide pillar (5).

2. Fixing device according to claim 1, **characterised in that** the guide pillar (5) is formed such that it tapers conically from the head part (6) towards the supporting part (2).

3. Fixing device according to claim 1, **characterised in that** the head part is a head plate (6) which is formed on the end of the guide pillar (5) away from the supporting part (2).

4. Fixing device according to any one of claims 1 to 3, **characterised in that** the counter bearing part is a counter bearing ring (7) encircling the guide pillar (5).

5. Fixing device according to claim 4, **characterised in that** the counter bearing ring (7) is connected to the guide pillar (5) by means of a number of linking bars (8), wherein each linking bar (8) has a predetermined breaking point (14).

6. Fixing device according to claim 5, **characterised in that** the predetermined breaking points (14) are formed so that they are the same.

7. Fixing device according to claim 6, **characterised in that** each predetermined breaking point (14) is formed by a taper in the material in the longitudinal direction of the guide pillar (5).

8. Fixing device according to any one of claims 1 to 7, **characterised in that** an elongated locking part (9) is present which is mounted displaceably in the guide pillar (5) and is arranged in a locking position with a section between the latching elements (3).

## Revendications

1. Dispositif de fixation pour fixer une pièce de montage (15) à une partie de support (16) avec un élément d'appui (2) et avec un nombre d'éléments d'encliquetage arrière (3), qui s'étendent en s'éloignant d'un côté de l'élément d'appui (2), une colonne de guidage (5) étant présente sur le côté opposé aux éléments d'encliquetage arrière (3) de l'élément d'appui (2), ladite colonne de guidage portant une partie de tête (6) sur une portion espacée de l'élément d'appui (2) et une partie de butée (7) entourant la colonne de guidage (5) qui sont disposées à distance l'une de l'autre, la partie de butée (7) étant reliée à la colonne de guidage (5) par au moins un point de rupture déterminé (14), **caractérisé en ce que** la partie de butée (7) est disposée sur le côté de la partie de tête (6) tourné vers l'élément d'appui (2) et **en ce que** la colonne de guidage (5) s'étend en s'éloignant de l'élément d'appui (2) de telle sorte que la pièce de montage (15) peut être déplacée dans la direction de la partie de support (16) par une force destructrice exercée sur le ou chaque point de rupture déterminé (14) guidée par la colonne de guidage (5).

2. Dispositif de fixation selon la revendication 1, **caractérisé en ce que** la colonne de guidage (5) est conçue de manière à se rétrécir coniquement de la partie de tête (6) en direction de l'élément d'appui (2).

3. Dispositif de fixation selon la revendication 1, **caractérisé en ce que** la partie de tête est une tête (6) qui est formée à l'extrémité opposée à l'élément d'appui (2) de la colonne de guidage (5).

4. Dispositif de fixation selon l'une quelconque des revendications 1 à 3, **caractérisé en ce que** la partie de butée est un anneau de butée (7) qui entoure la colonne de guidage (5).

5. Dispositif de fixation selon la revendication 4, **caractérisé en ce que** l'anneau de butée (7) est relié à la colonne de guidage (5) par un nombre de barrettes de liaison (8), chaque barrette de liaison (8) présentant un point de rupture déterminé (14).

6. Dispositif de fixation selon la revendication 5, **caractérisé en ce que** les points de rupture déterminés (14) sont formés à l'identique.

7. Dispositif de fixation selon la revendication 6, **caractérisé en ce que** chaque point de rupture déterminé (14) est formé par un rétrécissement de matériau dans la direction longitudinale de la colonne de guidage (5).

8. Dispositif de fixation selon l'une quelconque des revendications 1 à 7, **caractérisé en ce qu'**une partie de verrouillage (9) allongée est présente, **en ce qu'**elle est placée coulissante dans la colonne de guidage (5) et disposée dans une position de verrouillage avec une portion entre les éléments d'encliquetage arrière (3).
